# EUROPEAN PATENT APPLICATION

(11) **EP 2 814 044 A1**
(43) Date of publication of application: **17.12.2014**
(21) Application number: 14170182.1
(22) Date of filing: 28.05.2014
(51) Int. Cl.: H01F 7/18

(54) **Method and apparatus for determining the condition of a control element**

(30) Priority: 28.05.2013 US 201361827906 P
(71) Applicant: PARKER HANNIFIN CORPORATION, Cleveland, OH 44124-4141 (US)
(72) Inventor: Stevens Clyde Bennett, Buffalo Grove, IL 60089 (US)
(74) Representative: Belcher, Simon James

(57) **Abstract**

A circuit (60) is provided for determining a position of a control element (24) arranged in proximity to an electro-magnetic field of a solenoid coil (22) for movement in one direction toward one stopped position relative to the solenoid coil in response to increasing electrical current flow through the solenoid coil and for movement away from the one stopped position relative to the solenoid coil in response to decreasing electrical current flow through the solenoid coil. The circuit includes a first detector circuit (36) operative to measure first current fluctuations during increasing current flow through the solenoid coil and to determine the occurrence of a pull-in spike based on a comparison of the first current fluctuations and a first prescribed value to identify when the control element reaches the one stopped position. The circuit also includes a second detector circuit (38) operative to measure second current fluctuations during decreasing current flow through the solenoid coil and to determine the occurrence of another condition based on a comparison of the second current fluctuations and a second prescribed value to identify when the control element moves away from the one stopped position.

## Description

The present invention relates to a method and apparatus for determining the condition of a control element. More specifically, the invention relates to a method and apparatus for determining the condition of a control element comprising a ferrous armature movable within an electro-magnetic field of a solenoid.

Hydraulic, pneumatic or other motion control or fluid control systems may include a movable component such as a valve or other device. The movable component may include a control element, and the control element may be actuated, for example, by an electro-magnetic actuator, by a pilot actuator or other actuator in response to a command control signal. When the command control signal has been given to the actuator, it can be desirable to know that the control element has in fact reached the desired condition in response to the command control signal.

Prior art methods and apparatuses for determining the condition of a control element may include a sensing element such as a linear variable differential transformer ("LVDT"), a mechanical switch, or a potentiometer. While such devices provide satisfactory results, they require some connection to the control element and thus may require a "seal point" to prevent fluids or other contaminants from entering the connection point. Other prior art devices may include a Hall-effect sensor or a permanent magnet arranged to move with a fluid control element, the movement or position being transmitted magnetically to a sensor such as for example a reed switch. Such devices, however, may not operate properly when subjected to magnetic fields generated by electric solenoids. Still other prior art devices may include a displacement measurement device and associated method of the type disclosed in US-7969146.

A device and method in accordance with the invention enables status detection of a control element, such as an armature of a solenoid, without being detrimentally affected by magnetic fields or requiring a physical connection point. In this regard, dips and/or spikes in the current passing though the solenoid windings can be detected and used to determine when the armature has shifted from one position to another.

A signal indicative of the armature status can be based on pull-in current spike detection along with a solenoid energized condition to indicate both the presence of a command control signal and the presence of the condition desired by the command control signal. Further, by combining back EMF current spike detection with solenoid de-energized condition, the presence of an opposite command control signal and the presence of the condition desired by the opposite command control signal can be detected.

The invention therefore provides a circuit for determining a position of a control element arranged in proximity to an electro-magnetic field of a solenoid coil for movement in one direction toward one stopped position relative to the solenoid coil in response to increasing electrical current flow through the solenoid coil, and for movement away from the one stopped position relative to the solenoid coil in response to decreasing electrical current flow through the solenoid coil. The circuit includes: a first detector circuit configured to obtain first current fluctuations during increasing current flow through the solenoid coil, and provide an output indicative of the control element being at the one stopped position based on a comparison of the first current fluctuations and a first prescribed value; and a second detector circuit configured to obtain second current fluctuations during decreasing current flow through the solenoid coil, and provide an output indicative of the control element being away from the one stopped position based on a comparison of the second current fluctuations and a second prescribed value.

Optionally, the circuit further includes a switching device for selectively applying power to the solenoid coil, wherein the first detector circuit is arranged electrically in series with the switching device and the solenoid coil, and the second detector circuit is arranged in parallel with the solenoid coil.

Optionally, the first detector circuit comprises: a first sensor operative to measure a first current passing through the solenoid coil while the power switch is in a first position providing power to the solenoid coil and current flow through the solenoid coil is increasing; and a first comparator operative to compare fluctuations in the first measured current to the first prescribed value.

Optionally, the first sensor comprises a first resistor and a first voltage sensor connected in parallel with the first resistor, the first sensor providing a measured current based on a measured voltage drop across the first resistor.

Optionally, the circuit further includes a first integrator operatively coupled to the first sensor and the first comparator, the first integrator operative to provide to the first comparator an output corresponding to an integral of the first current.

Optionally, the second detector circuit comprises: a second sensor operative to detect a second current flowing through the solenoid coil while the power switch is in a second position isolating power from the solenoid coil and current flow through the solenoid coil is decreasing; and a second comparator operative to compare fluctuations in the second measured current to the second prescribed value.

Optionally, the second sensor comprises a second resistor and a second voltage sensor connected in parallel with the second resistor, the second sensor providing a measured current based on a measured voltage drop across the second resistor.

Optionally, the circuit further includes a second integrator operatively coupled to the second sensor and the second comparator, the second integrator operative to provide to the second comparator an output corresponding to an integral of the second current.

Optionally, the second detector circuit comprises a diode operative to prevent current flow through the second detector circuit while current flow through the solenoid coil is increasing.

Optionally, a cathode of the diode is electrically connected to the solenoid coil.

Optionally, the circuit further includes a signal generator circuit operatively coupled to the first detector circuit and the second detector circuit, the signal generator circuit operative to provide an output indicative of the control element being at the one stopped position based on the output from the first detector circuit or the control element not being at the one stopped position based on the output of the second detector circuit.

Optionally, the circuit further includes a power supply for providing power to the solenoid coil, wherein the first detector circuit is series connected with the solenoid coil and the power supply, and the second detector circuit is parallel connected with the solenoid coil.

Optionally, the circuit further includes the solenoid coil.

Optionally, the circuit further includes circuitry configured to detect application of power to the solenoid coil, wherein the first detector circuit is configured to determine the occurrence of a pull-in spike based on the comparison and the application of power to the solenoid coil.

Optionally, the circuit further includes circuitry configured to detect removal of power to the solenoid coil, wherein the second detector circuit is configured to determine the occurrence of another condition based on the comparison and the removal of power to the solenoid coil.

The invention also provides a method for determining the position of a control element. The method includes: placing the control element in proximity to an electro-magnetic field of a solenoid coil for movement in one direction toward one stopped position relative to the solenoid coil in response to increasing electrical current flow through the solenoid coil and for movement away from the one stopped position relative to the solenoid coil in response to decreasing electrical current flow through the solenoid coil; obtaining current fluctuations during increasing current flow through the solenoid coil and comparing the measured current fluctuations with a first prescribed limit to detect when a pull-in current flow condition is reached to identify when the control element reaches the one stopped position; and obtaining current fluctuations during decreasing current flow through the solenoid coil and comparing the measured current fluctuations with a second prescribed limit to detect when another condition is reached to identify when the control element moves away from its one stopped position.

Optionally, the step of measuring current fluctuations during increasing current flow and comparing the measured fluctuations with the first prescribed limit includes detecting the presence of a connected external voltage source across the solenoid coil.

Optionally, the step of measuring current fluctuations during decreasing current flow and comparing the measured fluctuations with second predetermined limits includes detecting the absence of a connected external voltage source across the solenoid coil.

Optionally, the other condition is back EMF.

Optionally, the method includes generating an output indicating a location of the control element.

The invention is described below by way of example with reference to the accompanying drawings, in which:
Figure 1 illustrates a single solenoid two position valve system.
Figure 2 is a block diagram illustrating exemplary circuit modules that may be used in a circuit for detecting a change in position of a control element.
Figure 3 is a graph illustrating pull-in current spike in an exemplary solenoid, with current ramped up over an extended time period greater than typical operating times.
Figure 4 is a schematic diagram of circuit that may be used to measure pull-in or drop-out current spike.
Figure 5 is a graph illustrating drop-out current spike in an exemplary solenoid, with current ramped down over an extended time period greater than typical operating times.
Figures 6A, 6B, and 6C are contemporaneous graphs for an exemplary solenoid valve, with current ramped up and down over an extended time period greater than typical operating times, illustrating current flow vs. time (including pull-in and drop-out current spikes), fluid flow vs. time, and fluid pressure vs. time, respectively.
Figure 7A is a graph similar to Figure 3 illustrating pull-in current spike, with current ramped up over a time period within a range of typical operating times.
Figure 7B is a graph similar to Figure 7A, with the addition of a plot of armature position vs. time to show that pull-in current spike occurs when the armature stroke bottoms out and stops.
Figure 8 is a graph illustrating both pull-in and back EMF current spikes in an exemplary solenoid, with current ramped up and down over an extended time period greater than typical operating times.
Figure 9 is a graph illustrating current flow vs. time for a stuck spool or armature condition in which the armature does not achieve the position or condition commanded, showing that pull-in current, drop-out current and back EMF are not present which allows the apparatus to detect that commanded movement of the armature did not occur.
Figure 10 is a schematic diagram of circuit that may be used to measure back EMF current spike in an exemplary solenoid valve.
Figure 11 is a schematic diagram of a circuit that may be used to measure pull-in and back EMF current spikes to generate a useable output indicating the condition of a control element movably disposed within the electro-magnetic field of an electrical solenoid.
Figure 12 is a flow chart illustrating a method that generates a useable output indicating the condition of a control element movably disposed within the electro-magnetic field of an electrical solenoid.

In the case of control elements such as ferrous armatures associated with electrical solenoids, phenomena or events known as pull-in current, drop-out current, and back EMF occur. When an electrical current flows through an electrical solenoid and its associated armature bottoms out in its fully displaced position in the direction of the electro-magnetic force acting on the armature, a negative current spike (referred to as "pull-in" current spike) occurs. Similarly, when the electrical current is turned off and the armature moves in the opposite direction off its fully displaced position, a positive current spike (referred to as "drop-out" current spike) occurs. Also, when the electrical current is turned off and the armature moves in the described opposite direction off its fully displaced position, movement of the armature through the solenoid produces a back EMF across the solenoid. A method and apparatus in accordance with the present disclosure uses a combination of these events to detect and signal the condition of the control element.

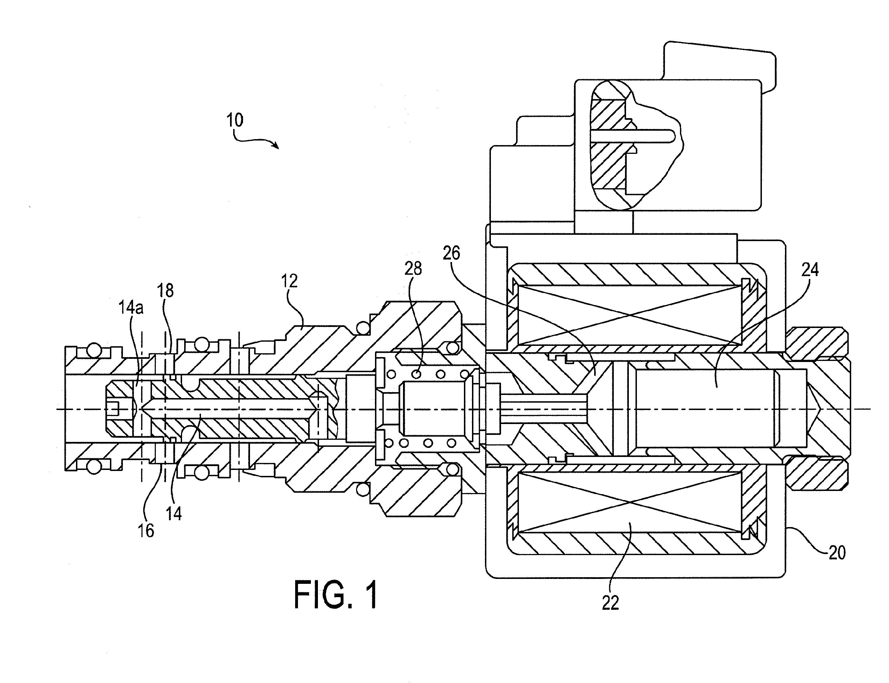

Referring now to the drawings in greater detail, Figure 1 is a cross section of an exemplary solenoid-operated valve assembly 10 to which the principles of the present disclosure may be applied. The solenoid-operated valve assembly 10 may be any conventional type, such as, for example, the general type disclosed in US-7969146.

The valve assembly 10 shown in Fig. 1 is a two-position valve assembly, although the invention may be applied to other solenoid-operated valve assemblies (e.g., a double solenoid-three position valve assembly). Further, while the invention is described in the context of a solenoid operated device, the device and method in accordance with the invention can be applied to non-solenoid operated devices. For example, opening and closing of a fluid flow valve may not be done by a solenoid and armature but rather by a pilot valve, manual actuation or other device that includes a control element. A sensing solenoid and armature then may be arranged relative to the control element, with the armature being connected to the control element. The solenoid and armature then operate in the manner described herein to generate a useable output indicating the condition of the control element. For example, the sensing solenoid may be powered at a level that does not cause movement of the sensing armature and the attached control element. The movement of the control element as created by a separate pilot valve enabled force, manual actuation or other device then will move the connected sensing armature and thus produce the same type of detectable pull-in, drop-out or back EMF indications, thereby providing an indication of the condition of a non-solenoid actuated control element.

The valve assembly 10 includes a valve body 12 having a valve spool 14 for selectively coupling an input port 16 to an output port 18. More specifically, when the spool 14 is in a first position (e.g., to the left), the input port 16 is isolated from the output port 18 by the spool 14 and the flow of fluid is inhibited. When the spool 14 is in a second position (e.g., to the right) the input port 16 is in fluid communication with the output port 18 via a port 14a in the spool 14 and thus fluid will flow through the respective ports.

The spool 14 is coupled to an actuator, such as an electro-mechanical solenoid 20. The solenoid 20 includes an electromagnetically inductive coil 22 wound around a movable steel or iron slug (termed the armature 24). An air gap 26 within the solenoid allows the magnetic flux to circulate with minimum resistance (reluctance), while a spring 28 provides a force that urges the spool 14 to the closed position.

To operate the valve 10, electrical power is applied to the solenoid coil 22 via electrical leads (not shown), thereby creating magnetic flux that produces magnetic poles in the armature 24. The armature 24 then will be urged along the lines force in such a direction so as to be drawn within the solenoid coil 22, thereby overcoming the spring force and moving the spool 14 to the open position. Upon removal of power from the solenoid coil 22, the flux will collapse and the force applied by the armature 24 will be reduced to zero. The spring 28 causes the spool 14 and armature 24 to move to the closed position thereby inhibiting fluid flow.

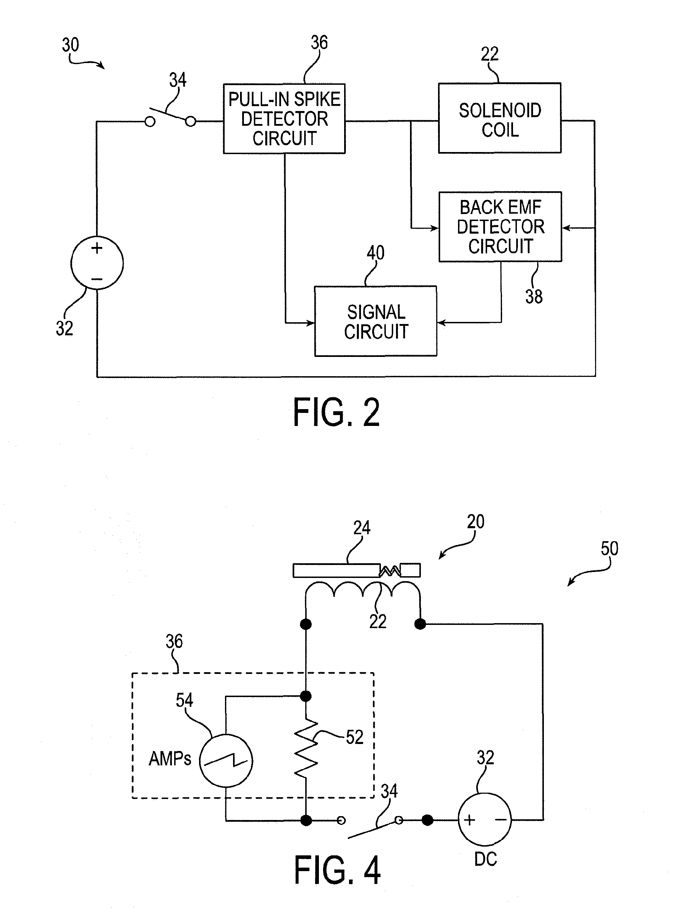

Figure 2 shows a circuit 30 that can be used to detect a shift in position of the control element positioned by the armature 24 of a solenoid 20 selectively powered by power source 32 via switch 34. The circuit 30 includes a pull-in spike detector circuit 36 (also referred to as a first detector circuit) in series with the solenoid coil 22 and power switch 34, and a back EMF detector circuit 38 (also referred to as a second detector circuit) in parallel with the solenoid coil 22. As will be described below, the pull-in spike detector circuit 36 detects a pull-in spike caused when power is applied to the solenoid coil 22 and fluctuations occur during increasing current flow through the coil due to the armature 24 reaching its bottom-out position (i.e., the position at which the armature is inhibited from further motion). Further, the back EMF spike detector circuit 38 detects a back EMF spike caused when power is removed from the solenoid coil 22 and the armature 24 is urged back through the coil winding 22 by spring 28 bringing the control element 14 to its original closed position.

A signalling circuit 40 receives data from the pull-in spike detector circuit 36 and the back EMF spike detector circuit 38, and provides a signal indicative of the status of the valve (e.g., open or closed).

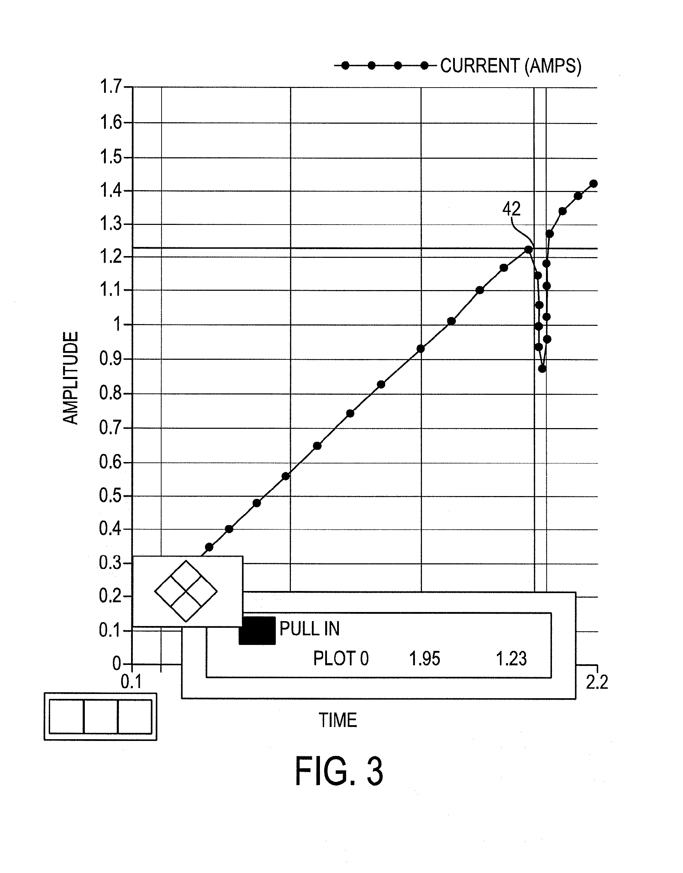

Figure 3 is a graph illustrating pull-in current spike in the exemplary solenoid actuated valve 10. In Figure 3 current through the solenoid 20 is ramped up from zero over an extended time period greater than typical solenoid operating times. The extended time period is illustrated to enhance the clarity of the graph relative to a similar graph for substantially shorter time periods (typically the current ramp time in an electrical solenoid valve would be substantially shorter, making it difficult to see the current spike).

For example, a typical solenoid operating time may be in the range of hundredths of a second, but for purposes of this example the operating time illustrated in Figure 3 is in the range of full seconds.

The horizontal axis in Figure 3 is time in seconds starting at 0 seconds, and the vertical axis is current amplitude in amps through the solenoid starting at 0 amps. A control element, which in the construction to which Figure 3 relates is a ferrous armature 24 movable relative to the solenoid coil 22 within the electro-magnetic field of the solenoid coil 22, operates the valve 10 to open and close fluid flow through the valve 10. The valve 10 in this construction is closed when there is no current through the solenoid coil 22 and is open when the armature 24 has moved fully in one direction to a stopped position relative to the solenoid coil 22 in response to increasing electrical current flow through the solenoid.

As shown in Figure 3, when the control element (armature 24) reaches the stopped position and the valve 10 is fully open, the current reaches the illustrated inflexion point 42 slightly above 1.2 amps at about 1.9 seconds. At this point, the valve 10 is fully open. When this condition is reached, the negative current spike referred to as pull-in current spike occurs and the current abruptly but momentarily drops to a little less than 0.9 amps before returning to its straight line path, as shown in Figure 3.

Referring now to Figure 4, a circuit 50 employing a pull-in spike detector circuit 36 for measuring current flow through a solenoid coil 22 is shown. As will be described below, the pull-in spike detector circuit includes a voltage sensing device, such as a resistor 52, and measuring device 54. The circuit 50 includes a power supply 32 having a positive terminal electrically connected to a first terminal of switch 34, and a second terminal of switch 34 is electrically connected to a first terminal of resistor 52. A second terminal of resistor 52 is electrically connected to a first terminal of solenoid coil 22, and a second terminal of solenoid coil 22 is electrically connected to a negative terminal of power supply 32. The sensor 54 is electrically connected in parallel with resistor 52.

In operation, the power supply 32 creates a voltage potential across the solenoid coil 22 when the switch 34 is closed. Sensor 54 measures current flow and current fluctuations through solenoid 20 by measuring voltage drop across resistor 52 and calculating the current based on the measured voltage drop and the known resistance of resistor 52.

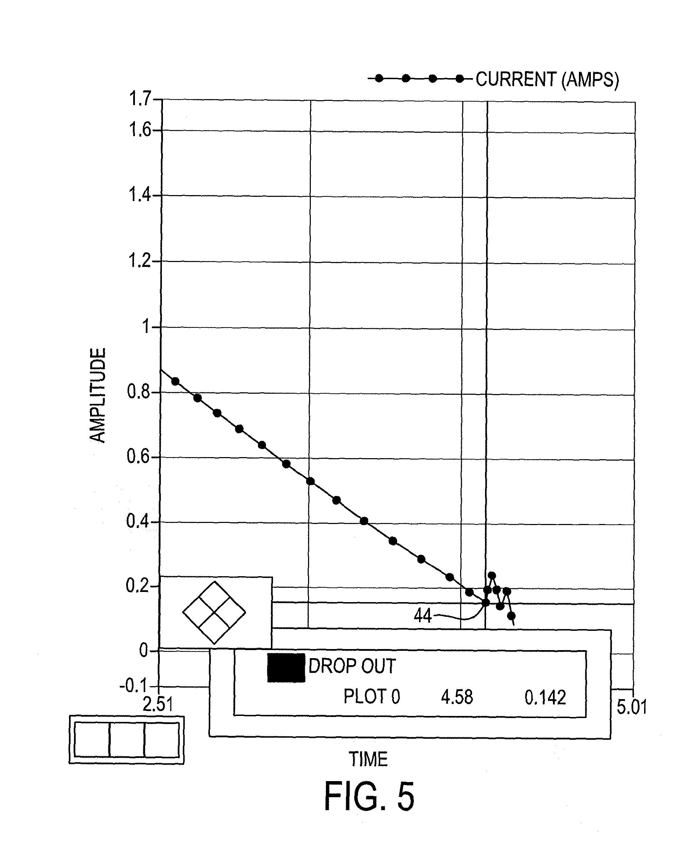

Figure 5 is a graph illustrating drop-out current spike in the solenoid actuated valve 10 which is discussed above, with current through the solenoid 20 ramped down to zero over an extended time period greater than typical solenoid operating times. The horizontal axis in Figure 5 is time in seconds starting at about 2.5 seconds and ending at about 5.0 seconds, and the vertical axis is current amplitude in amps through the solenoid 20. As shown in Figure 5, when electrical current is turned off and the decreasing current reaches the inflexion point 44 (at about 0.15 amps and about 4.6 seconds), the armature begins to move in the described opposite direction off its fully displaced position. At this point, the valve 10 begins to close. When this condition is reached, the positive current spike referred to as drop-out current spike occurs and the current abruptly but momentarily increases to slightly above 0.2 amps before returning to its straight line path down to 0 amps.

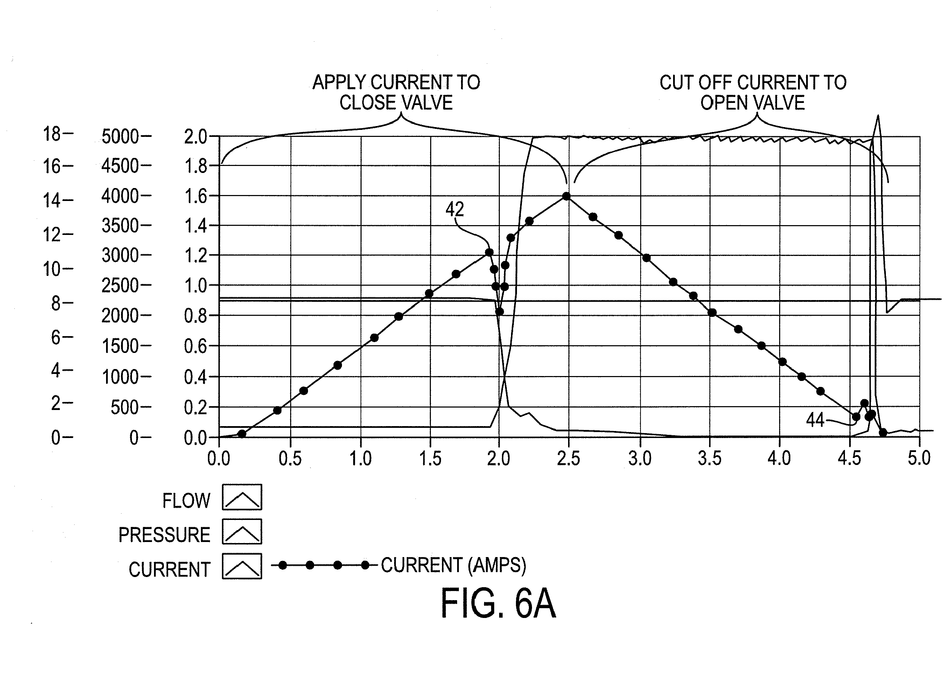

Figure 6A is a graph showing both pull-in and drop-out current spikes in an solenoid 20, with current ramped up over about 2.5 seconds and down over about 2.5 seconds (which are extended time periods greater than typical operating times). Also, inflexion points 42 (armature bottoms out to close valve as current is applied to solenoid) and 44 (armature 24 moves off its bottom-out position) are shown in Figure 6A. The graph of Figure 6A shows behaviour with a slower shifting proportional or soft shift valve.

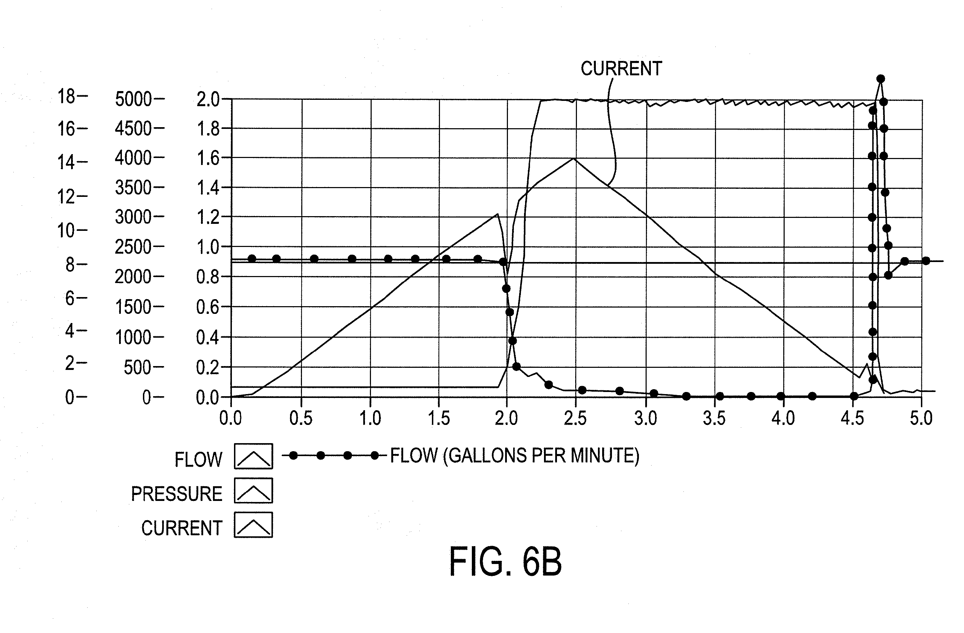

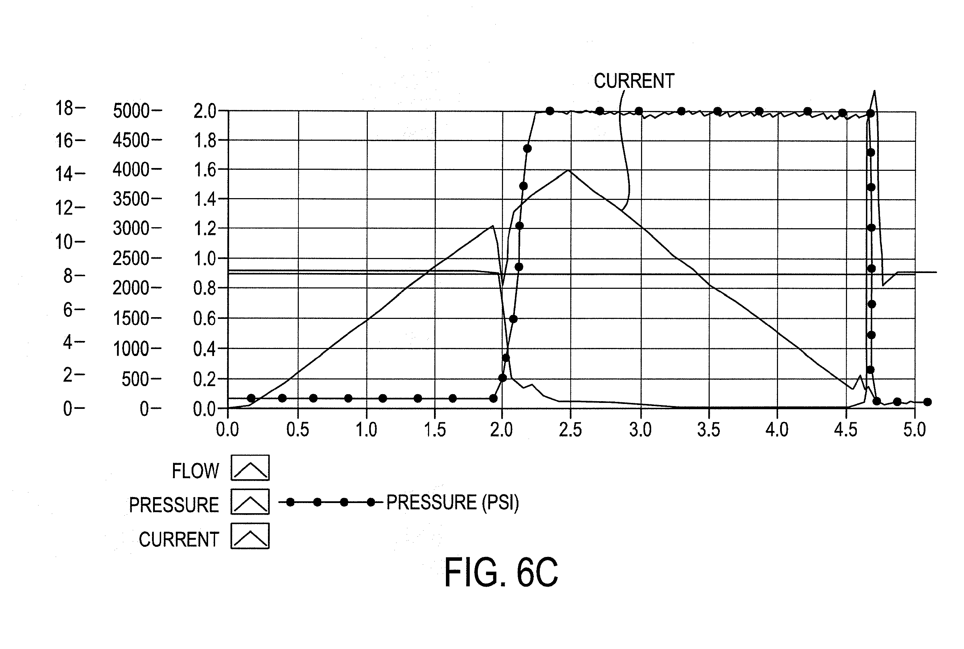

The graph of Figure 6B shows flow through the normally open valve (i.e., the valve is open when there is no current through the solenoid 20 and is closed when current is flowing through the solenoid). As can be seen, when the solenoid coil 22 is not energized (the valve is open) approximately 0.5 l.s⁻¹ (8 gallons per minute) flow through the valve. When solenoid coil 22 is energized and pull-in occurs (at approximately 2.0 seconds), the valve closes and flow drops to 0 until the solenoid coil is de-energized (about 4.7 seconds), at which time the valve is opened and fluid flow spikes to above 1.1 l.s⁻¹ (18 gallons per minute) before reaching a steady state flow of about 0.5 l.s⁻¹ (8 gallons per minute). Figure 6C is a graph showing the variation in pressure in the valve 10. The graphs of Figures 6A, 6B and 6C correspond to the same solenoid valve at the same time to show contemporaneous values of current, flow and pressure.

As shown in Figure 6A, even with the extended time period the drop-out current spike is significantly less than the pull-in current spike. Because of this, during actual solenoid operating conditions with much shorter time periods drop-out current spike can be so small that is can become difficult to detect and measure. As a result, comparing the detected spikes to limits for generating a useable output indicating the condition of the armature control element 24 can be challenging.

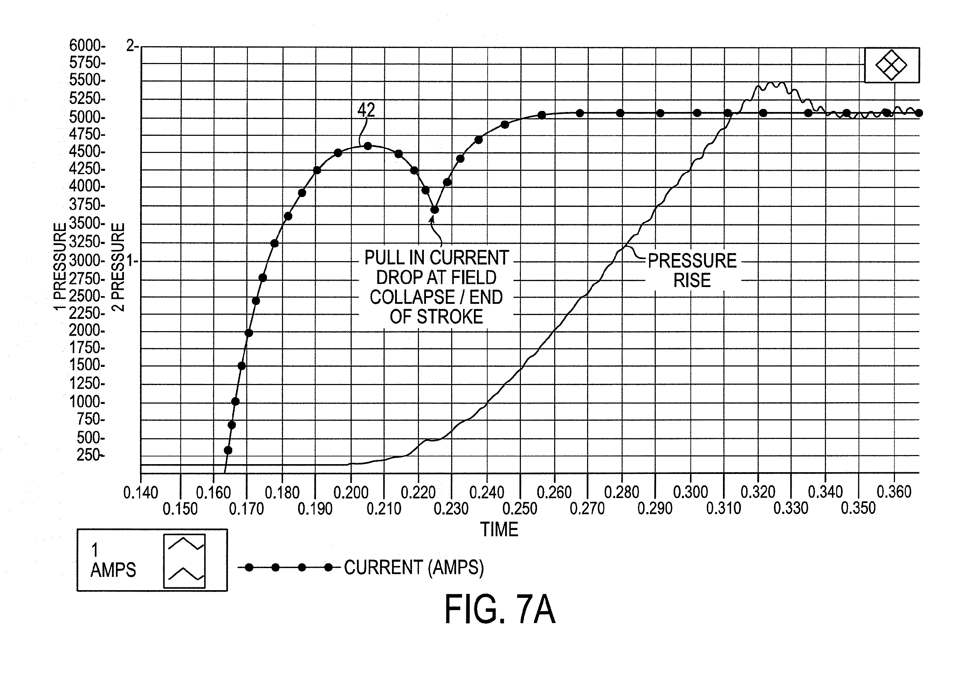

Figure 7A is a graph similar to Figure 3 showing pull-in current spike, with current ramped up over a time period within a range of typical operating times of the solenoid-operated valve other than slow shifting or soft shift valves. In Figure 7A, the horizontal axis is time in seconds and the vertical axis is current through the solenoid in amps. The switch 34 (Figure 2) is closed at about 0.160 seconds, and inflexion point 42 is reached at about 0.205 seconds (about 0.045 seconds after switch 34 is closed). Steady state current is reached at about 0.260 seconds (0.100 seconds after switch 34 is closed).

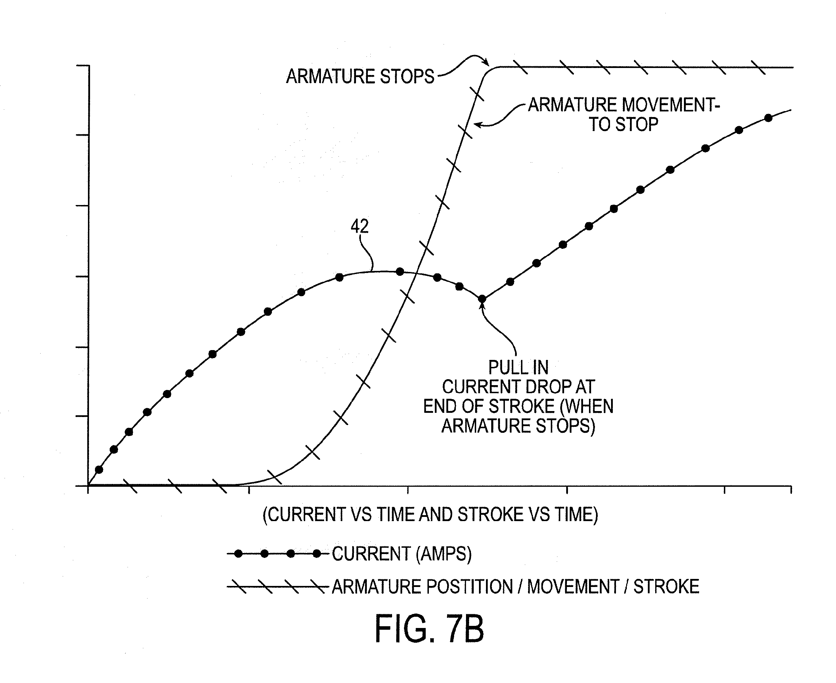

Figure 7A shows the short time periods during which the pull-in current spike occurs during typical operating times, to illustrate the difficulty of detecting and measuring pull-in current spike. Since drop-out current spike is of smaller magnitude than pull-in current spike, detecting and measuring drop-out current spike is even more difficult. Because of this, drop-out current spike may not be as useful as pull-in current spike to generate a useable output indicating the condition of an armature control element 24 movably disposed within the electro-magnetic field of an electric solenoid coil 22. Figure 7B is a graph similar to Figure 7A, with the addition of a plot of armature position to show that pull-in current spike occurs when the armature stroke bottoms out and stops.

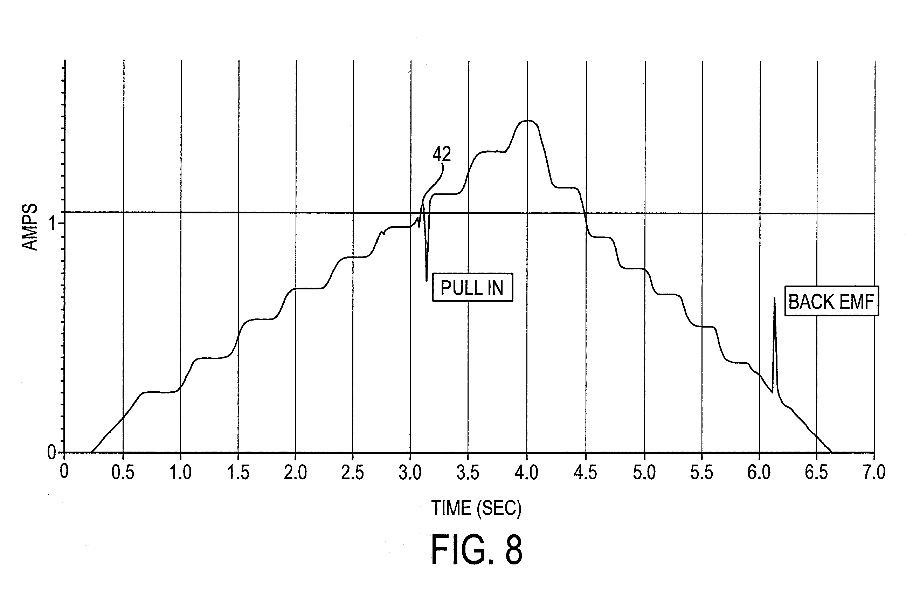

Figure 8 is a graph similar to Figure 6A, but showing both pull-in and back EMF current spikes in an exemplary solenoid coil, with current ramped up over about 4.0 seconds and down over about 2.5 seconds, which are extended time periods greater than typical operating times. As shown in Figure 8, the back EMF current spike is of significantly greater magnitude than the drop-out current spike of Figure 6A, and the disclosed embodiment in accordance with the present disclosure can use a combination of pull-in current spike with back EMF current spike in a manner described below to generate a useable output indicating the condition of an armature control element 24 movably disposed within the electro-magnetic field of an electric solenoid coil 22.

Specifically, the pull-in current spike confirms a condition at which the armature 24 bottoms out and reaches a first stopped position, and the back EMF current spike confirms a condition at which the armature 24 moves away from the first stopped position. As described below, it can be preferred that a status signal is generated by combining pull-in current spike detection with solenoid energized/powered condition to indicate both the presence of a command control signal and the presence of the condition desired by the command control signal. Further, it can also be preferred that the status signal is generated by combining back EMF current spike detection with solenoid de-energized condition to indicate both the presence of an opposite command control signal and the presence of the condition desired by the opposite command control signal.

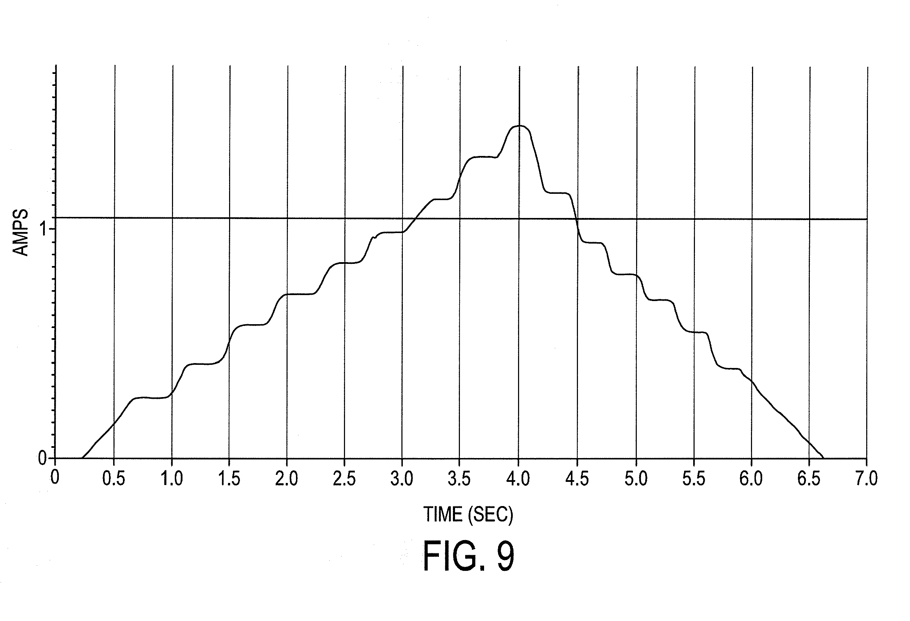

Figure 9 is a graph showing current flow vs. time for a stuck spool or armature condition in which the armature does not achieve the position or condition commanded. As can be seen in Figure 9, pull-in current, drop-out current and back EMF are not present, which allows the apparatus and method to detect and communicate that commanded movement of the armature did not occur.

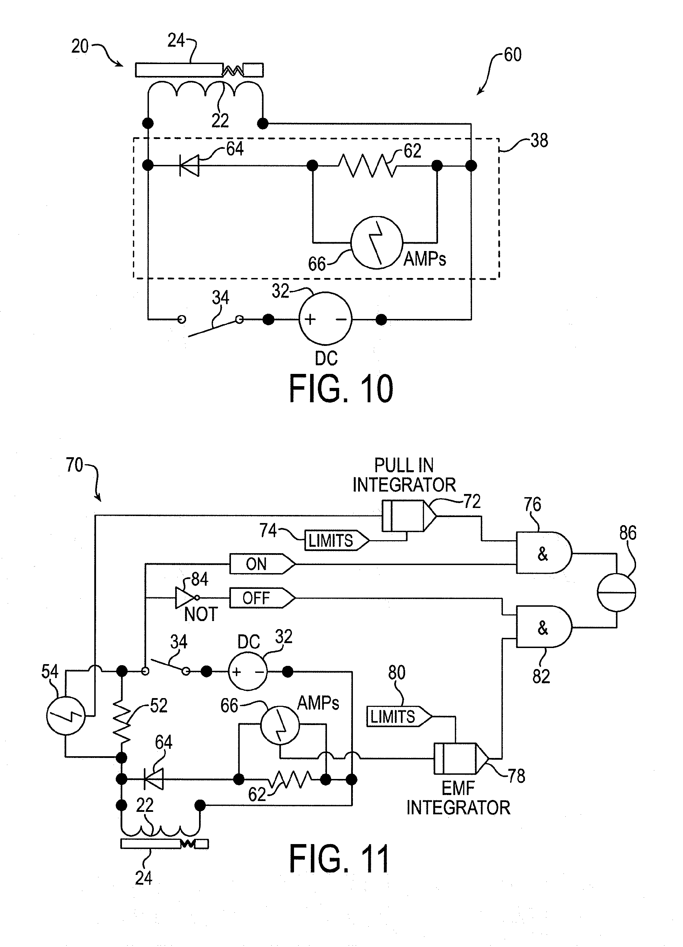

Figure 10 is a schematic diagram of a circuit 60 employing a back EMF spike detector circuit 38 for measuring back EMF current spike in a solenoid valve 10. The circuit 60 includes a power supply 32 having a positive terminal electrically connected to a first terminal of switch 34, and a second terminal of switch 34 electrically connected to a first terminal of the solenoid coil 22. The second terminal of solenoid coil 22 is electrically connected to the negative terminal of power supply 32. A first terminal of resistor 62 is electrically connected to the negative terminal of the power supply 32, and the second terminal of resistor 62 is electrically connected to the anode of diode 64. The cathode of diode 64 is electrically connected to the first terminal of solenoid coil 22 and the second terminal switch 34, and sensor 66 is electrically connected in parallel with resistor 62.

In operation, the power supply 32 creates a voltage potential across the solenoid 22 when switch 34 is closed (also referred to as a first switch position), thereby creating an increasing current through the solenoid coil 22 and moving armature 24 to the bottom out position, while diode 64 prevents current flow through resistor 62 under this condition. When switch 34 is opened (also referred to as a second switch position) the current through the solenoid coil 22 decreases toward zero amps. Further, the second sensor is isolated from the power supply 32 and diode 64 permits the back EMF generated by movement of the armature 24 away from the bottom out position to cause current to flow through resistor 62 due to EMF. The sensor 66 measures this back EMF by measuring voltage drop across resistor 62 and calculating the current based on the measured voltage drop and the known resistance of resistor 62.

Figure 11 shows a circuit 70 for detecting both pull-in spike and back EMF spike due to movement of a control element (e.g., armature 24 of solenoid 20). The circuit 70 of Figure 11 employs features of the circuits shown in Figures 4 and 10 described above. Thus, the circuit includes a power supply 32 having a positive terminal electrically connected to a first terminal of switch 34, and a second terminal of switch 34 electrically connected to a first terminal of resistor 52. A second terminal of resistor 52 is electrically connected to a first terminal of solenoid coil 22, and a second terminal of solenoid coil 22 is electrically connected to a negative terminal of power supply 32. A first terminal of resistor 62 is electrically connected to the negative terminal of the power supply 32, and a second terminal of resistor 62 is electrically connected to the anode of diode 64. The cathode of diode 64 is electrically connected to the second terminal of resistor 52. A first sensor 54 is electrically connected in parallel with resistor 52, and a second sensor 66 is electrically connected in parallel with resistor 62.

The combination of the resistor 52 and sensor 54 are shown is forming a first current sensor and the combination of the resistor 62 and sensor 66 are shown as forming a second current sensor. It is noted, however, that other types of current sensors may be employed in the circuit 70.

Pull-in integrator 72, which may be an analog integrator or a digital integrator, receives the current measurement from the sensor 54 along with first prescribed limit 74 for detecting pull-in current. The specific values entered for the first prescribed limit 74 may be a factory preset value. Alternatively, the first prescribed limit 74 may be calculated and/or scaled based an auto calibration routine. It is noted that the sensing and/or integration functions can take many forms, including analog or digital circuitry.

Pull-in integrator 72 may be embodied as a combination of an integrator and a comparator. More specifically, the pull-in integrator 72 can operate by analysing a change in current with respect to time. In this regard, an integrator function may be employed to the measured current. The integrated current may then be compared to the first prescribed limit 74, and if the integrated current exceeds the first prescribed limit the pull-in integrator will provide a "TRUE" (1) output. If the integrated current does not exceed the first prescribed limit, then the pull-in integrator 72 will provide a "FALSE" (0) output. The integrator and comparator functions may be embodied in a single device, or separate integrator and comparator may be connected together to form the pull-in integrator 72.

The output of the pull-in integrator 72, which may be a binary signal corresponding to the presence or absence of pull-in current in the coil 22, is provided to one input of first AND gate 76. A second input of the first AND gate 76 is coupled to the second terminal of switch 34 and corresponds to the status of switch 34 (i.e., ON (TRUE or "1") or OFF (FALSE or "0")). Accordingly, the output of the first AND gate 76 is TRUE when the switch 34 is closed and the current fluctuation sensed through resistor 52 exceeds the preset pull-in limit.

EMF integrator 78 receives the current measurement from sensor 66, along with a second prescribed limit value 80 for detecting back EMF. Like the first limit value 74, the second limit value 80 may be factory preset or may be calculated/scaled after installation based on an auto calibration routine. EMF integrator 78 operates in a manner as described above with respect to the pull-in integrator 72 and therefore its operation will not be described here.

The output of the EMF integrator 78, which may be a binary signal corresponding to the presence or absence of EMF induced current in the coil 22, is provided to one input of second AND gate 80. A second input of the second AND gate 80 is coupled to an output of inverter 82, which has an input coupled to the second terminal of switch 34. Accordingly, the output of the second AND gate 80 is TRUE when the switch 34 is open and the current fluctuation sensed through resistor 62 exceeds the preset EMF limit. The output of first AND gate 76 and second AND gate 80 are provided to status indicator 84, which for example may be a multi-coloured light (e.g., red and green).

The resistor 52, sensor 54, pull-in integrator 72, limit 74 and first AND gate 76 may be considered to be part of the pull-in spike detector circuit 36. Further, the resistor 62, diode 64, sensor 66, EMF integrator 78, limit 80, second AND gate 82 and inverter 84 may be considered to be part of the back EMF spike detector circuit 38.

In operation, the valve 10 is operated by closing switch 34, which applies power to solenoid coil 22 through resistor 52 thereby causing armature 24 to move. Diode 64 prevents current flow through resistor 62 while current flow through the solenoid coil is increasing and thus back EMF cannot be detected. Sensor 54 measures the current passing through resistor 52 and provides the measurement to pull-in integrator 72. Pull-in integrator 72 compares current fluctuations in the measured current to the first limit 74. Assuming the armature 24 has not yet reached its bottom out position (and thus a pull-in spike has not occurred), the fluctuations will be minimal and therefore the output of pull-in integrator 72 will be FALSE (0). Thus, output of the first AND gate 76 will also be false.

When the armature 24 reaches the bottom-out position, a pull-in spike will occur and this spike is provided to the pull-in integrator 72. Since the measured current spike will cause a current fluctuation that will exceed the first limit 74, the output of the pull-in integrator will be TRUE (1), which is provided to the input of first AND gate 76. Further, since the switch 34 is closed (indicating the solenoid is energized) the second input of the first AND gate 76 also will be TRUE (1), while the inverter 84 provides a FALSE input to second AND gate 82 thus maintaining its output at FALSE (0). Accordingly, the output of the first AND gate 76 will be TRUE, the output of the second AND gate 82 will be FALSE, and the light 86 will be commanded to illuminate a first colour (e.g., green indicating the valve is open).

The valve 10 may be returned to its normal position by opening switch 34, thereby de-energizing the solenoid coil 22. The term "opened" and "de-energized" include conditions in which relatively small residual current flows through the solenoid coil 22 after application and removal of sufficient current to cause movement of the armature 24, such as might occur when the switch 34 is an electronic switching device. De-energizing the solenoid coil 22 provides a FALSE signal to the first AND gate 76 and a TRUE signal (by virtue of the inverter 84) to one input of the second AND gate 82. Assuming the armature 24 has not yet begun to move off the bottom out position (and thus an EMF spike has not occurred), the current fluctuations will be minimal (less than that of the predetermined limit 80) and therefore the output of EMF integrator 78 will be FALSE (0). Accordingly, the output of both the first AND gate 76 and the second AND gate 82 will be FALSE.

As the armature 24 shifts off the bottom-out position, back EMF in the solenoid coil 22 causes fluctuation in the current flowing through the resistor 62, which is measured by sensor 66 and provided to EMF integrator 78. Since the current fluctuation corresponding to the back EMF due to armature movement will be greater than the second limit 80, the output of the EMF integrator 78 will be TRUE (1) and thus the output of the second AND gate 82 will be TRUE. Thus, the output of the first AND gate 76 will be FALSE and the output of the second AND gate 82 will be TRUE, and the light 86 will be commanded to illuminate a second colour (e.g., red indicating the valve closed position).

Accordingly, when it has been detected that the armature 24 has shifted in a direction corresponding to the valve being open, the output from first AND gate 76 can illuminate the green light. When it has been detected that the armature 24 has shifted in a direction corresponding to the valve being closed, the output from second AND gate 82 can illuminate the red light. In this manner, the status of the armature 24 (and thus the valve) can readily be determined.

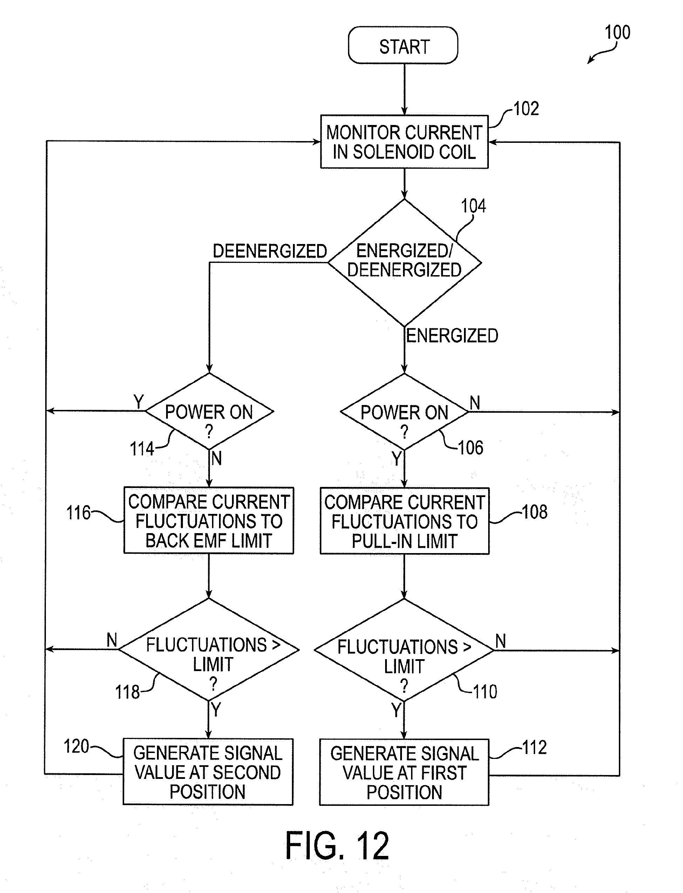

Figure 12 shows steps in a method 100 for detecting a positional shift of a control element. Beginning at block 102, the current through the solenoid coil 22 is monitored. For example, and as discussed herein, a sensor can measure the current flowing through the coil 22 (e.g., based on a voltage drop across resistor 52). At block 104 it is determined if an energized command or a de-energized command has been provided to the solenoid coil 22. Such command can be based on the status of the switch 34, for example.

If an energized command has been issued, then at block 106 a determination is made as to whether power is present at the coil 22. If power is not present, then a pull-in spike will not occur and the method moves back to block 102. However, if power is present, then fluctuations in the current are monitored and compared to a preset limit (a pull-in spike limit) as indicated at block 108. At block 110, if the fluctuations in the current are less than the pull-in limit then it can be concluded that a pull-in spike is not present. Thus, it also can be concluded that the armature 24 has not moved to the bottom-out position and the method moves back to block 102. However, if at block 110 the current fluctuations are greater than the preset limit, then it can be concluded that a pull-in spike has occurred (and thus the armature 24 has moved to the bottom-out position). At block 110 a signal is generated indicative of the armature 24 being at the bottom-out position (and that the valve 10 is in one of an open or closed state).

Moving back to block 104, if it is determined that a de-energize command is provided to the solenoid coil 22, then at block 114 it is determined if power is present at the coil 22. If power is present at the coil 22, then the method moves back to block 102 as there is no need to check for back EMF. However, if at block 114 power is not present at the coil 22, then at block 116 fluctuations in the monitored current are compared to the back EMF limit. If at block 118 the fluctuations are not greater than the back EMF limit, then the method moves back to block 102. However, if at block 118 the fluctuations are greater than the back EMF limit, it can be concluded that the armature 24 has moved off the bottom-out position and the method moves to block 120, where a signal is generated indicative of the armature 24 moving off the bottom-out position (and that the valve is in the other of the open or closed state).

Accordingly, the apparatus and method in accordance with the invention enable a position of a control element to be determined, without requiring a physical connection of a sensor to the control element.

Although the invention has been shown and described with respect to a certain embodiment or embodiments, equivalent alterations and modifications may occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein exemplary embodiment or embodiments of the invention. In addition, while a particular feature of the invention may have been described above with respect to only one or more of several embodiments, such feature may be combined with one or more other features of the other embodiments, as may be desired and advantageous for any given or particular application.

## Claims

1. A circuit (70) for determining a position of a control element (24) arranged in proximity to an electro-magnetic field of a solenoid coil (22) for movement in one direction toward one stopped position relative to the solenoid coil in response to increasing electrical current flow through the solenoid coil, and for movement away from the one stopped position relative to the solenoid coil in response to decreasing electrical current flow through the solenoid coil, the circuit comprising:
(a) a first detector circuit (36) which is configured:
(i) to obtain first current fluctuations during increasing current flow through the solenoid coil, and
(ii) to provide an output indicative of the control element being at the one stopped position based on a comparison of the first current fluctuations and a first prescribed value, and
(b) a second detector circuit (38) which is configured:
(i) to obtain second current fluctuations during decreasing current flow through the solenoid coil, and
(ii) to provide an output indicative of the control element being away from the one stopped position based on a comparison of the second current fluctuations and a second prescribed value.

2. The circuit according to claim 1, further comprising a switching device (34) for selectively applying power to the solenoid coil (22), wherein the first detector circuit is arranged electrically in series with the switching device and the solenoid coil, and the second detector circuit is arranged in parallel with the solenoid coil.

3. The circuit according to claim 2, wherein the first detector circuit comprises:
a first sensor operative to measure a first current passing through the solenoid coil (22) while the power switch is in a first position providing power to the solenoid coil and current flow through the solenoid coil is increasing, and
a first comparator (72) operative to compare fluctuations in the first measured current to the first prescribed value.

4. The circuit according to claim 3, wherein the first sensor comprises a first resistor (52) and a first voltage sensor (54) connected in parallel with the first resistor, the first sensor providing a measured current based on a measured voltage drop across the first resistor.

5. The circuit according to claim 3 or claim 4, further comprising a first integrator operatively coupled to the first sensor and the first comparator, the first integrator operative to provide to the first comparator an output corresponding to an integral of the first current.

6. The circuit according to any one of claims 1 to 5, wherein the second detector circuit comprises:
a second sensor operative to detect a second current flowing through the solenoid coil (22) while the power switch is in a second position isolating power from the solenoid coil and current flow through the solenoid coil is decreasing, and
a second comparator (80) operative to compare fluctuations in the second measured current to the second prescribed value.

7. The circuit according to claim 6, wherein the second sensor comprises a second resistor (62) and a second voltage sensor (66) connected in parallel with the second resistor, the second sensor providing a measured current based on a measured voltage drop across the second resistor.

8. The circuit according to claim 6 or claim 7, further comprising a second integrator operatively coupled to the second sensor and the second comparator, the second integrator operative to provide to the second comparator an output corresponding to an integral of the second current.

9. The circuit according to any one of claims 1 to 8, wherein the second detector circuit comprises a diode (64) operative to prevent current flow through the second detector circuit while current flow through the solenoid coil is increasing wherein a cathode of the diode is electrically connected to the solenoid coil.

10. The circuit according to any one of claims 1 to 9, further comprising a signal generator circuit (40) operatively coupled to the first detector circuit and the second detector circuit, the signal generator circuit operative to provide an output indicative of the control element being at the one stopped position based on the output from the first detector circuit or the control element not being at the one stopped position based on the output of the second detector circuit.

11. The circuit according to any one of claims 1 to 10, further comprising a power supply (32) for providing power to the solenoid coil, wherein the first detector circuit is series connected with the solenoid coil and the power supply, and the second detector circuit is parallel connected with the solenoid coil.

12. The circuit according to any one of claims 1 to 11, further comprising the solenoid coil.

13. The circuit according to any one of claims 1 to 12, further comprising circuitry configured to detect application of power to the solenoid coil, wherein the first detector circuit is configured to determine the occurrence of a pull-in spike based on the comparison and the application of power to the solenoid coil, and circuitry configured to detect removal of power to the solenoid coil, wherein the second detector circuit is configured to determine the occurrence of another condition based on the comparison and the removal of power to the solenoid coil.

14. A method for determining the position of a control element, comprising:
placing the control element in proximity to an electro-magnetic field of a solenoid coil for movement in one direction toward one stopped position relative to the solenoid coil in response to increasing electrical current flow through the solenoid coil and for movement away from the one stopped position relative to the solenoid coil in response to decreasing electrical current flow through the solenoid coil,
obtaining current fluctuations during increasing current flow through the solenoid coil and comparing the measured current fluctuations with a first prescribed limit to detect when a pull-in current flow condition is reached to identify when the control element reaches the one stopped position, and
obtaining current fluctuations during decreasing current flow through the solenoid coil and comparing the measured current fluctuations with a second prescribed limit to detect when another condition is reached to identify when the control element moves away from its one stopped position.

15. The method according to claim 14, wherein measuring current fluctuations during increasing current flow and comparing the measured current fluctuations with the first prescribed limit includes detecting the presence of a connected external voltage source across the solenoid coil, and wherein measuring current fluctuations during decreasing current flow and comparing the measured current fluctuations with second predetermined limits includes detecting the absence of a connected external voltage source across the solenoid coil.
